# EUROPEAN PATENT SPECIFICATION

(11) **EP 2 063 147 B1**
(45) Date of publication and mention of the grant of the patent: **10.09.2014**
(21) Application number: 08020324.3
(22) Date of filing: 21.11.2008
(51) Int. Cl.: F16D 43/12

(54) **Vehicle**
Fahrzeug
Véhicule

(30) Priority: 21.11.2007 JP 2007301714
(43) Date of publication of application: 27.05.2009
(73) Proprietor: Yamaha Hatsudoki Kabushiki Kaisha, Shizuoka-ken Shizuoka 438-8501 (JP)
(72) Inventor: Inomori, Toshinori, Iwati-shi Shizuoka-ken 438-8501 (JP); Ishida, Yousuke, Iwati-shi Shizuoka-ken 438-8501 (JP)
(74) Representative: Grünecker, Kinkeldey, Stockmair & Schwanhäusser

(56) References cited:
- FR-A- 1 185 251
- GB-A- 887 736
- US-A- 2 957 565

## Description

The present invention relates to a vehicle, in particular a straddle-type vehicle such as a motorcycle including a centrifugal clutch, according to the preamble of claim 1. Such a vehicle is known from FR 1 185 251 A.

US 6,533,056 discloses a conventionally known motorcycle including a centrifugal clutch. In the conventional motorcycle including the centrifugal clutch, the centrifugal clutch is automatically engaged at the time of starting and automatically disengaged at the time of stopping. Due to this, there is no need for a rider to operate the clutch at the time of starting and stopping. Therefore, it only suffices that a rider operates an accelerator at the time of starting and stopping, with the result that the burden on the rider who operates the clutch is mitigated.

However, in the conventional motorcycle including the centrifugal clutch, the centrifugal clutch is constantly disengaged while the motorcycte is in the idling state, and the vehicle cannot, therefore, slow down. Due to this, even at slow driving or the like during traffic jam, the vehicle cannot run unless the rider operates the accelerator to raise the number of revolutions of an engine to be equal to or larger than a predetermined number of revolutions. However, during traffic jam or the like, even if a throttle is opened to raise the number of revolutions of the engine to temporarily accelerate vehicle speed, the vehicle cannot continue to run at the accelerated speed and the vehicle is subsequently often forced to come to a stop by braking operation or the like. Therefore, it is often disadvantageously necessary to frequently repeat open and close operations of the accelerator. The present invention has been made in view of the respects above.

It is an objective of the present invention to provide a vesicle including a centrifugal dutch, wherein the clutch operation for the driver at low speed can be facilitated.

According to the present invention, said objective is solved by a vehicle, in particular straddle-type vehicle such as a motorcycle, comprising: an engine configured to generate a driving force to drive at least one drive wheel; a centrifugal clutch configured to freely intermittently transmit the driving force from the engine to the drive wheel; and a clutch actuating element operable by a driver of the vehicle to disengage the centrifugal clutch, wherein the centrifugal clutch is configured to assume a partially engaged state to transmit a part of the driving force from the engine to the drive wheel when the engine is in its idling state and the clutch actuating element is not operated.

As stated above, the motorcycle including the centrifugal clutch can run at low speed by clutch operation.

Preferably, the centrifugal clutch includes: a driving-side solid of revolution including a first plate; a driven-side solid of revolution including a second plate opposed to the first plate in a predetermined direction; and a pressure plate operable by the clutch actuating element to move in the predetermined direction, the pressure plate being configured to rotate along with the driving-side solid of revolution and to contact the first plate with the second plate by moving in the predetermined direction.

Further, preferably the pressure plate is configured to contact the first plate with the second plate so as to transmit a part of a torque of the driving-side solid of revolution from the first plate to the driven-side solid of revolution via the second plate even when the engine is in its idling state.

With the preferred vehicle above, even in an idling state, a part of the torque of the driving-side solid of revolution is transmitted to the driven-side solid of revolution. That is, even in the idling state, a so-called partial clutch engagement state is realized. Due to this, even in an idling state, a part of the driving force of the engine is transmitted to the drive wheel. Therefore, the driver/rider can arbitrarily realize the partial clutch engagement state and a clutch disengagement state by operating the clutch actuating element. Due to this, the vehicle above can be driven while being in the idling state although the vehicle includes the centrifugal clutch. The vehicle above can run at low speed by appropriately operating the clutch actuating element without frequently repeating open and close operations of the throttle.

Preferably, the centrifugal clutch includes a centrifugal weight configured to move outward of a radial direction of the pressure plate by a movement amount according to a centrifugal force, and to press by a force according to the movement amount the pressure plate in a direction in which the first plate contacts with the second plate.

Further, preferably the centrifugal clutch includes an elastic body configured to urge the pressure plate toward the first plate and the second plate in such a way that the first plate contacts with the second plate even if the engine is in its idling state.

Still further, preferably an urging force of the elastic body applied to the pressure plate is adjustable.

Yet further still, preferably the elastic body includes a torsion spring, and, preferably, an attachment position on one end or both ends of the torsion spring is adjustable.

Preferably, a plurality of pins is arranged circumferentially about a rotational center of the pressure plate and capable of locking one end of the torsion spring, wherein the urging force of the torsion spring is adjusted by positions of the pins to be locked.

Further, preferably the driving-side solid of revolution includes a plurality of the first plates, the driven-side solid of revolution includes a plurality of the second plates, and the plurality of first plates and the plurality of second plates are alternately arranged along the predetermined direction.

Still further, preferably the centrifugal clutch includes a toggle mechanism configured to receive a torque of the pressure plate when the clutch actuating element declutches, and configured to convert the torque into a force for moving the pressure plate in a direction in which the first plate separates from the second plate.

According to a preferred embodiment, a sub clutch includes a friction plate configured to rotate along with the pressure plate, and, preferably, a pressing body configured to receive the torque from the friction plate by pressure-contacting with the friction plate at the time of declutching and to move in the predetermined direction along with the pressure plate.

Preferably, the toggle mechanism includes a first cam plate having a first cam surface formed thereon, and a second cam plate having a second cam surface formed thereon, the second cam surface being opposed to the first cam surface.

According to another preferred embodiment, a cam ball is arranged between the first cam surface and the second cam surface so as to push out the first cam plate and the second cam plate in a direction in which the first cam plate separates from the second cam plate when the second cam plate rotates relatively to the first cam plate in a predetermined rotational direction.

Preferably, a rotary shaft is fixed to the pressing body of the sub clutch and is attached to the second cam plate so as to rotate along with the second cam plate, said rotary shaft being preferably configured to receive the torque of the pressure plate via the sub clutch at the time of declutching and to rotate the second cam plate in the predetermined rotational direction.

Further, preferably the elastic body includes a first spring configured to urge the pressure plate toward the first plate and the second plate, and a second spring configured to urge the second cam plate toward the direction in which the first cam plate separates from the second cam plate.

In the following, the present invention is explained in greater detail by means of embodiments thereof in conjunction with the accompanying drawings, wherein:
- Fig. 1: is a side view of a motorcycle;
- Fig. 2: is a configuration view of principal elements of a power unit;
- Fig. 3: is a cross-sectional view of a clutch;

- Fig. 4: is a cross-sectional view of a push rod drive mechanism;
- Fig. 5(a): is a rear view of a second cam plate, Fig. 5(b) is a front view of a ball plate, and Fig. 5(c) is a front view of a first cam plate; and
- Figs. 6(a): and 6(b) are front views of a toggle mechanism.

### Among others, the following reference signs are used in the figures:

- 1: Motorcycle
- 2: Clutch (centrifugal clutch)
- 3: Engine
- 19: Rear wheel (drive wheel)
- 24: Clutch lever (clutch actuating element)
- 41: Roller weight (centrifugal weight)
- 46: Clutch housing (driving-side solid of revolution)
- 48: Clutch boss (driven-side solid of revolution)
- 64: Friction plate (first plate)
- 65: Clutch plate (second plate)
- 70: Abutment member
- 77: Pressure plate
- 81: Cam surface
- 100: Sub clutch
- 101: Friction plate
- 102: First pressing plate
- 103: Second pressing plate (pressing body)
- 200: Toggle mechanism
- 201: Slide shaft (rotary shaft)
- 202: First cam plate
- 202a: First cam surface
- 203: Second cam plate

- 203a: Second cam surface
- 204a: Cam ball
- 205: Torsion spring (elastic body)
- 205b: One end of torsion spring
- 210: Pin

A motorcycle 1 including a centrifugal clutch according to an embodiment will be described in detail with reference to the drawings. It should be noted, however, that the motorcycle 1 described below is only an example of a preferred mode for carrying out the present teaching. The present teaching is not limited to the motorcycle 1 described below. In the present specification, the motorcycle means a vehicle of a type that inclines when making a turn. The motorcycle mentioned herein is not limited to a two-wheeled vehicle but may be a vehicle having three or more wheels. In general, the present teaching is applicable to a vehicle such as a straddle-type vehicle having a body frame and a seat on which a rider can be seated straddling the body frame when being seated.

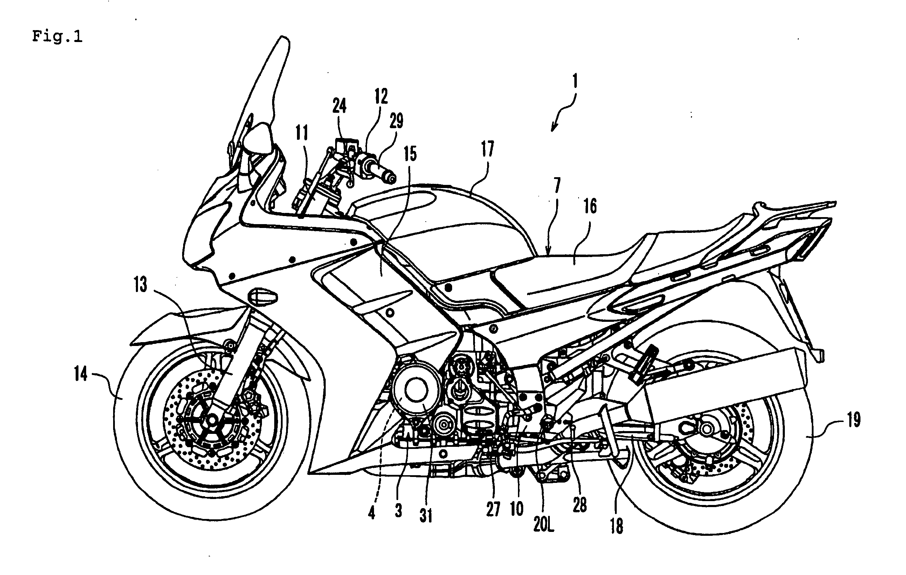

Fig. 1 is a left side view of the motorcycle 1 according to the embodiment. In the following description, it is assumed that longitudinal and crosswise directions are directions viewed from a passenger seated on a seat 16 to be described later.

As shown in Fig. 1, the motorcycle 1 includes a vehicle main body 7, a front wheel 14 provided on the front side of the vehicle main body 7, and a rear wheel 19 provided on the rear side of the vehicle main body 7.

The vehicle main body 7 includes a vehicle frame 10. The vehicle frame 10 includes a head pipe 11. A handle 12 is attached to an upper end of the head pipe 11. The front wheel 14 is rotatably attached to a lower end of the head pipe 11 via a front fork 13.

A power unit 3 is suspended on the vehicle frame 10. Further, a vehicle cover 15 is attached to the vehicle frame 10. A seat 16 is arranged from an almost central portion of the vehicle main body 7 to the rear side thereof in the longitudinal direction. A fuel tank 17 is disposed in front of the seat 16.

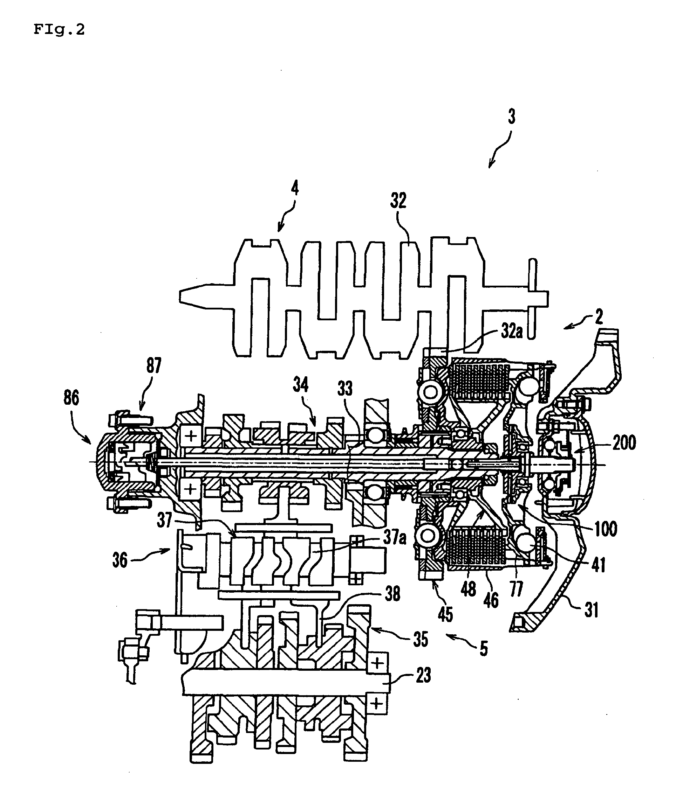

A rear arm 18 is swingably supported on the vehicle frame 10. The rear wheel 19 serving as a drive wheel is rotatably attached to the rear end of a rear arm 18. The rear wheel 19 is coupled to an engine 4 (see Fig. 2) via a power transmission mechanism which is not shown. Power of the engine 4 is thereby transmitted to the rear wheel 19 to rotate the rear wheel 19.

An accelerator grip (not shown) serving as an accelerator actuating element is provided on the right side of the handle 12. A left grip 29 is provided on the left side of the handle 12. Further, a clutch lever 24 serving as a clutch actuating element operated when a clutch 2 (see Fig. 2), to be described later, is to be disengaged is provided on the left side of the handle 12 in front of the left grip 29.

A footrest 20L is provided at a central portion of each of left and right sides of the vehicle main body 7 in the longitudinal direction. A shift pedal 27 operated when a transmission gear ratio of a transmission 5 (see Fig. 2), to be described later, is to be changed is provided on the left side of the vehicle main body 7 and slightly forward of the left footrest 20L. A side stand 28 is provided on the left side of the vehicle main body 7 and below the shift pedal 27 and the footrest 20L.

Referring to Fig. 2, a configuration of principal elements of the power unit 3 will next be described. As shown in Fig. 2, the power unit 3 includes the engine 4, the transmission 5, and the clutch 2. Although the type of the engine 4 is not limited to a specific type, the engine 4 is a water-cooled, four-stroke cycle, transverse four-cylinder engine according to the present embodiment.

Although not shown, the engine 4 includes four cylinders, pistons reciprocating in the cylinders, respectively, and a crankshaft 32 connected to the pistons via a connecting rod. The crankshaft 32 extends in a vehicle width direction. Reference numeral 31 denotes a crankcase.

As shown in Fig. 2, the crankshaft 32 is connected to the transmission 5 via the clutch 2. The transmission 5 includes a main shaft 33, a drive shaft 23, and a gear selection mechanism 36. The main shaft 33 is connected to the crankshaft 32 via the clutch 2. The main shaft 33 and the drive shaft 23 are respectively arranged in parallel to the crankshaft 32.

Multistage transmission gears 34 are attached to the main shaft 33. A plurality of transmission gears 35 that correspond to the multistage transmission gears 34 are attached to the drive shaft 23. The plurality of transmission gears 34 and the plurality of transmission gears 35 are engaged with one another only based on a one-to-one correspondence. At least either the transmission gear 34 other than the selected transmission gear 34 among the plurality of transmission gears 34 or the transmission gears 35 other than the selected transmission gear 35 among the plurality of transmission gears 35 are rotatable about the main shaft 33 or the drive shaft 23. That is, at least either the unselected transmission gear 34 or the unselected transmission gears 35 run idle about the main shaft 33 or the drive shaft 23. In other words, rotation is transmitted between the main shaft 33 and the drive shaft 23 only via the selected transmission gear 34 and the selected transmission gear 35 that engage with each other.

The gear selection mechanism 36 selects the transmission gears 34 and 35. Specifically, a shift cam 37 of the gear selection mechanism 36 selects the transmission gears 34 and 35. A plurality of cam grooves 37a are formed on an outer peripheral surface of the shift cam 37. A shift fork 38 is attached to each of the cam grooves 37a. The shift fork 38 is engaged with predetermined transmission gears 34 and 35 of the main shaft 33 and the drive shaft 23, respectively. With the rotation of the shift cam 37, each of a plurality of shift forks 38 is guided by the cam grooves 37a and moved in an axial direction of the main shaft 33. Among the transmission gears 34 and 35, gears that engage with each other are thereby selected. Specifically, only paired gears according to a rotational angle of the shift cam 37 among the plurality of transmission gears 34 and 35 are fixed to the main shaft 33 and the drive shaft 23 by a spline. Positions of the transmission gears are thereby determined and the rotation is transmitted between the main shaft 33 and the drive shaft 23 at a predetermined gear ratio via the transmission gears 34 and 35. It should be noted that the gear selection mechanism 36 is operated by the shift pedal 27 shown in Fig. 1.

With such a configuration, when predetermined paired transmission gears 34 and 35 are fixed to the main shaft 33 and the drive shaft 23, the clutch 2 is engaged and the engine 4 is driven, the power of the engine 4 is transmitted to the main shaft 33 via the clutch 2. Furthermore, rotation is transmitted between the main shaft 33 and the drive shaft 23 at the predetermined transmission gear ratio via the predetermined paired transmission gears 34 and 35, thereby driving the drive shaft 23 to rotate. When the drive shaft 23 is driven to rotate, a transmission mechanism (not shown) such as a chain that connects the drive shaft 23 to the rear wheel 19 transmits a driving force to the rear wheel 19, thereby the wheel 19 is rotated. In the present embodiment, a power transmission mechanism connecting the engine 4 to the rear wheel 19 is constituted by a transmission mechanism (not shown), such as the clutch 2, the transmission 5, and the chain.

In the present embodiment, the clutch 2 is constituted by a wet multiplate friction clutch. Further, the clutch 2 is a centrifugal clutch that is automatically disengaged at the time of starting and stopping and disengaged by operation of the clutch lever 24 by a rider. Referring to Figs. 2, 3, and 4, a configuration of the clutch 2 will be described in detail.

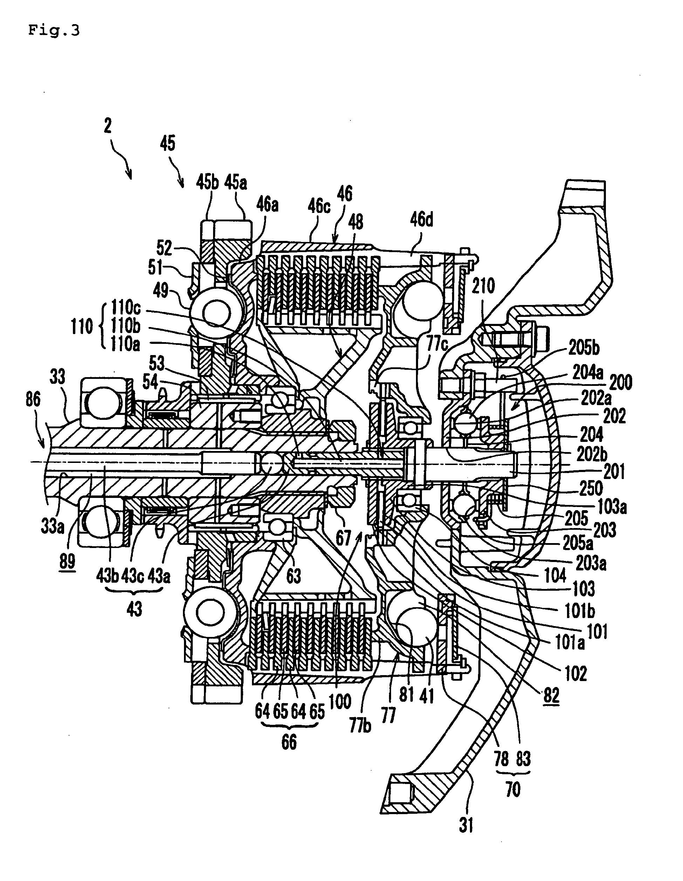

As shown in Fig. 3, the clutch 2 includes a clutch housing 46. The main shaft 33 penetrates through the clutch housing 46. The clutch housing (driving-side solid of revolution) 46 includes a housing main body 46c. The housing main body 46c is formed into a substantially cylindrical shape having one end closed by a bottom 46a. The main shaft 33 is inserted into the bottom 46a of the housing main body 46c. The housing main body 46c includes a plurality of pairs of arms 46d. Each of the arms 46d extends from the bottom 46a toward outside of the vehicle width direction.

As shown in Fig. 3, the vehicle width direction is the crosswise direction. In the present embodiment, since the clutch 2 is arranged on the right side of the main shaft 33, the outside of the vehicle width direction corresponds to the right side and the inside thereof corresponds to the left side. Therefore, the outside and inside of the vehicle width direction will be simply referred to as right side and left side, respectively.

A scissors gear 45 is attached to the clutch housing 46. The scissors gear 45 includes two gears 45a and 45b, a spring 49, and two plates 51 and 52. The gears 45a and 45b are located between the two plates 51 and 52. The two plates 51 and 52 are mutually fixed by a fixing tool, such as a rivet or a screw with respect to the axial direction of the main shaft 33. The two gears 45a and 45b are thereby substantially fixed to each other with respect to the axial direction of the main shaft 33. With respect to the rotational direction, the two gears 45a and 45b are thereby rotatable about each other.

The gears 45a and 45b are equal in the number of teeth. The gears 45a and 45b are arranged so that the teeth are alternately located in a circumferential direction. The spring 49 is provided between the gears 45a and 45b. Due to this, torsion torque is applied to the gears 45a and 45b by the spring 49. The torsion torque absorbs variable torque of the engine 4.

The gear 45a of the scissors gear 45 is engaged with a gear 32a (see Fig. 2) of the crankshaft 32. The gear 45a of the scissors gear 45 is fixed to the bottom 46a of the clutch housing 46 so as not to be a relatively rotatable. With such a configuration, the gear 45a of the scissors gear 45 and the clutch housing 46 integrally rotate following the rotation of the crankshaft 32.

A needle bearing 53 and a spacer 54 that is nonrotatably fixed to the main shaft 33 are disposed between the scissors gear 45 and the main shaft 33. The scissors gear 45 is rotatable about the main shaft 33 by the needle bearing 53. Namely, rotation of the scissors gear 45 is intended such that it is not transmitted directly to the main shaft 33.

A clutch boss (driven-side solid of revolution) 48 is nonrotatably fixed to the main shaft 33 by a nut 67. That is, the clutch boss 48 rotates along with the main shaft 33. A thrust bearing 63 is disposed between the clutch boss 48 and the scissors gear 45. Due to this, the scissors gear 45, the needle bearing 53, the spacer 54, and the clutch boss 48 are restricted by the thrust bearing 63 so as not to come close to one another to a predetermined distance or less. Namely, the scissors gear 45, the needle bearing 53, and the spacer 54 are restricted to move to the clutch boss 48 with respect toward the axial direction of the main shaft 33.

A plurality of friction plates (first plates) 64 are arranged inside of the clutch housing 46. Each friction plate 64 is fixed to the clutch housing 46 with respect to the rotational direction of the main shaft 33. Due to this, the plurality of friction plates 64 rotate along with the clutch housing 46. Each friction plate 64 is displaceable with respect to the axial direction of the main shaft 33. Due to this, a distance between the two adjacent friction plates 64 is variable.

The plurality of friction plates 64 are arranged in the axial direction of the main shaft 33. A clutch plate (second plate) 65 is disposed between the adjacent friction plates 64. The clutch plate 65 is opposed to the adjacent friction plates 64. Each clutch plate 65 is fixed to the clutch boss 48 with respect to the rotational direction of the main shaft 33. Due to this, the plurality of clutch plates 65 rotate along with the clutch boss 48. Further, each clutch plate 65 is displaceable with respect to the axial direction of the main shaft 33. Due to this, a distance between the mutually adjacent clutch plates 65 is variable.

In the present embodiment, a plate group 66 is constituted by the plurality of friction plates 64 and the plurality of clutch plates 65.

A pressure plate 77 is arranged on the right side of the main shaft 33. The pressure plate 77 is formed into a substantially disc shape. A sub clutch 100, to be described later, is provided at a center-side portion of the pressure plate 77. A radially outward end of the pressure plate 77 is engaged with an arm 46d. The pressure plate 77 is thereby not rotatable about the clutch housing 46 but it rotates along with the clutch housing 46.

A pressing portion 77b protruding toward the plate group 66 is formed in a radially outward portion of the pressure plate 77. This pressing portion 77b is opposed to the friction plate 64 located at a rightmost side of the plate group 66. If the pressure plate 77 moves leftward, the pressing portion 77b presses the plate group 66 leftward. As a result, the friction plates 64 and the clutch plates 65 of the plate group 66 are press-contacted more strongly.

On the other hand, a cam surface 81 that supports a roller weight 41 is formed on a surface opposite to the plate group 66 in the radially outward portion of the pressure plate 77. A plurality of cam surfaces 81 and a plurality of roller weights (centrifugal weights) 41 are provided along the circumferential direction. The plurality of cam surfaces 81 are arranged radially about an axial center of the main shaft 33. The cam surfaces 81 are inclined in such a manner that they are directed to the right side along the radial direction.

A roller retainer 78 is arranged on the right side of the pressure plate 77. The roller retainer 78 is formed into a band ring viewed from the axial direction of the main shaft 33. The roller retainer 78 is opposed to the cam surfaces 81 of the pressure plate 77. A space 82 that becomes narrower toward outward in a radial direction of the main shaft 33 is thereby formed by the cam surfaces 81 and the roller retainer 78.

Similarly to the pressure plate 77, a radially outward end of the roller retainer 78 is engaged with the plurality of arms 46d. The roller retainer 78 is thereby nonrotatable about the cutch housing 46. In other words, the roller retainer 78 rotates along with the clutch housing 46. In the axial direction of the main shaft 33, the roller retainer 78 is displaceable with respect to the clutch housing 46.

The roller retainer 78 is urged leftward by a plate sprig 83 serving as an urging member. In other words, the roller retainer 78 is urged toward the plate group 66 by the disc spring 83. The roller retainer 78 and the disc spring 83 constitute an abutment member 70 that abuts the roller weight 41 toward the cam surfaces 81 side.

The roller weight 41 is provided in each of a plurality of spaces 82. The roller weight 41 revolves following the rotation of the clutch housing 46 and moves on the cam surface 81 toward radially outward by means of a centrifugal force generated during the revolution.

The roller weight 41 receives a reaction force from the abutment member 70 and presses the pressure plate 77 toward the plate group 66 side.

As described later, in the present embodiment, the pressure plate 77 is configured to pressure-contact with the plate group 66 even in the idling state. By so configuring, even in the idling state, the clutch 2 is in the partial clutch engagement state and the driving force is transmitted to the rear wheel 19 so as to be able to drive at low speed in the present embodiment.

If the number of revolutions of the crankshaft 32 is small, the number of revolutions of the clutch housing 46 also becomes small. Due to this, the centrifugal force acting on the roller weight 41 is relatively small and the roller weight 41 is located relatively inward. A force by which the roller weight 41 presses the pressure plate 77 leftward thereby becomes weak. As a result, the degree of pressure-contact with the plate group 66 becomes weak and a torque transmittable from the clutch housing 46 to the clutch boss 48 becomes relatively small.

On the other hand, when the number of revolutions of the crankshaft 32 is relatively large, the number of revolutions of the clutch housing 46 becomes relatively large accordingly. Due to this, as the number of revolutions of the clutch housing 46 becomes larger, the centrifugal force acting on the roller weight 41 becomes stronger. If the centrifugal force acting on the roller weight 41 is equal to or greater than a predetermined value, the roller weight 41 moves outward. The pressure plate 77 is thereby pressed leftward by the roller weight 41 and moved toward the plate group 66. As a result, the plate group 66 is pressure-contacted relatively strongly and the torque transmittable from the clutch housing 46 to the clutch boss 48 becomes relatively large.

As shown in Fig. 3, the clutch 2 according to the present embodiment includes a sub clutch 100. The sub clutch 100 includes a friction plate 101, a first pressing plate 102 facing a left surface (hereinafter, referred to as "first friction surface") 101 a of the friction plate 101, and a second pressing plate (pressing body) 103 facing a right surface (hereinafter, referred to as "second friction surface") 101 b of the friction plate 101.

The friction plate 101 is engaged with the pressure plate 77 so as to rotate along with the pressure plate 77. Specifically, a slide arm section 77c is formed on the pressure plate 77. A groove (not shown) is formed on a radially outward side of the friction plate 101. The friction plate 101 is configured so that the groove of the friction plate 101 is slidably engaged with the slide arm section 77c, whereby the friction plate 101 rotates along with the pressure plate 77.

The first pressing plate 102 is fixed to a short push rod 43a to be described later. Due to this, the first pressing plate 102 is movable along with the short push rod 43a in the axial direction. Further, the first pressing plate 102 rotates along with the short push rod 43a.

The second pressing plate 103 is serration-fitted into the short push rod 43a. Due to this, the second pressing plate 103 rotates along with the short push rod 43a but is relatively movable in the axial direction with respect to the short push rod 43a. The second pressing plate 103 includes a boss 103a extending rightward. This boss 103a rotatably supports the pressure plate 77 via a bearing 104. The second pressing plate 103 and the pressure plate 77 are thereby relatively rotatable about each other. Furthermore, the second pressing plate 103 and the pressure plate 77 are configured to move integrally in the axial direction.

When the short push rod 43a moves rightward, the first pressing plate 102 also moves rightward. The first pressing plate 102 presses the friction plate 101 against the second pressing plate 103 accordingly. As a result, the friction plate 101 is sandwiched between the first pressing plate 102 and the second pressing plate 103. A torque of the pressure plate 77 is thereby transmitted to the first pressing plate 102 and the second pressing plate 103 via the friction plate 101 and the torque is applied to the first pressing plate 102 and the second pressing plate 103.

As described later, a through-hole 33a is formed within the main shaft 33. The short push rod 43a, a ball 43c, and a long push rod 43b of a push mechanism 43 are inserted into the through-hole 33a. A gap 89 between an inner wall of the through-hole 33a and the long push rod 43b and the like serves as an oil supply path for supplying oil to the clutch 2.

Moreover, an oil supply path 110 that guides the oil in the gap 89 to the sub clutch 100 is formed in the short push rod 43a. The oil supply path 110 is configured to include an oil introduction path 110a formed in a left portion of the short push rod 43a, an oil path 110b formed at a central portion of the short push rod 43a, and an oil lead-out path 110c formed in a right portion of the short push rod 43a. The oil introduction path 110a is a hole extending in a radial direction and connected to the oil path 110b extending in an axial direction. Likewise, the oil lead-out path 110c is a hole extending radially and connected to the oil path 110b. An outlet of the oil lead-out path 110c, that is, a radially outward opening of the oil lead-out path 110c is open toward the first friction surface 101 a and the second friction surface 101 b of the friction plate 101. Due to this, the oil on the oil supply path 110 is supplied toward the first friction surface 101 a and the second friction surface 101 b.

As shown in Fig. 3, the clutch 2 according to the present embodiment includes a toggle mechanism 200. The toggle mechanism 200 converts a part of the torque of the pressure plate 77 into a force for disengaging the clutch 2 so as to reduce a force required to disengage the clutch 2. The toggle mechanism 200 according to the present embodiment is constituted by a so-called ball cam. The toggle mechanism 200 includes a slide shaft (rotary shaft) 201 fixed to the second pressing plate 103, a first cam plate 202, a second cam plate 203, a ball plate 204, and a coil spring (elastic body) 205 that urges the second cam plate 203 in a direction in which the second cam plate 203 separates from the first cam plate 202. A support plate 250 that supports the coil spring 205 by abutting a right portion of the coil spring 205 is fixed onto a tip end side of the slide shaft 201.

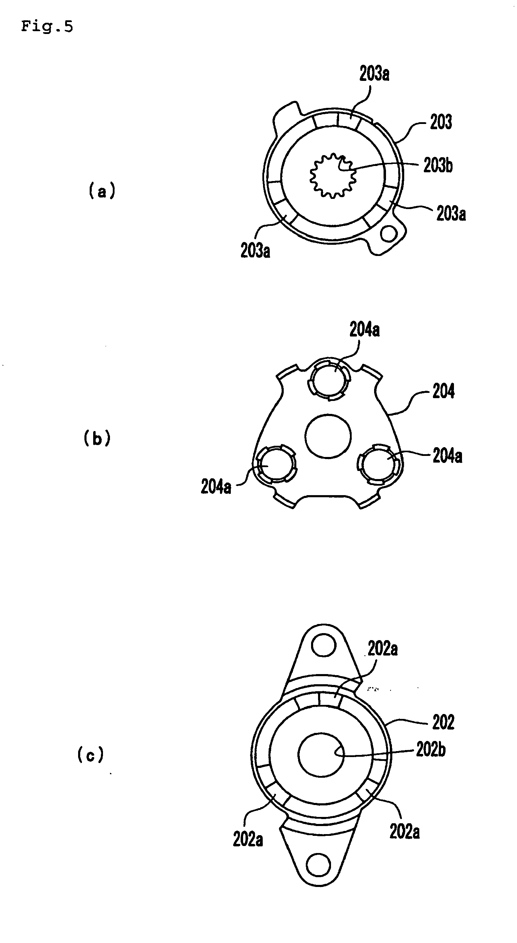

As shown in Fig. 5(b), three balls 204a are rollably supported on the ball plate 204. The three balls 204a are arranged equidistantly along a circumferential direction about an axial center of the slide shaft 201. However, the number of balls 204a supported on the ball plate 204 is not limited to three.

As shown in Fig. 5(c), a through-hole 202b is formed at a central portion of the first cam plate 202. As shown in Fig. 3, the slide shaft 201 is inserted into the through-hole 202b. The slide shaft 201 is movable axially with respect to the first cam plate 202 and rotatable about the first cam plate 202. That is, the first cam plate 202 is configured not to rotate even if the slide shaft 201 rotates.

As shown in Fig. 5(a), a serration hole 203b is formed at a central portion of the second cam plate 203. The second cam plate 203 is serration-fitted into the slide shaft 201. Due to this, the second cam plate 203 is axially movable with respect to the slide shaft 201 and rotates along with the slide shaft 201.

One end 205b of the coil spring 205 is locked to a pin 210 fixed to the crankcase 31. The other end 205a of the coil spring 205 is locked to the second cam plate 203. By doing so, the second cam plate 203 receives a torque from the coil spring 205 so as to rotate around the slide shaft 201. Further, the second cam plate 203 receives a slide force for moving toward the first cam plate 202 in the axial direction of the slide shaft 201 by means of an urging force that is a sum of an urging force of the disc spring 83 and that of the coil spring 205.

A first cam surface 202a is formed on a right surface (sheet front-side surface in Fig. 5(c)) of the first cam plate 202. A second cam surface 203a is formed on a left surface (sheet front-side surface in Fig. 5(a)) of the second cam plate 203. The first cam surface 202a and the second cam surface 203a are formed so that the balls 204a ride on from between the both cam surfaces 202a and 203a when the second cam plate 203 rotates in a predetermined direction and so that the balls 204a are contained in between the both cam surfaces 202a and 203a when the second cam plate 203 rotates in a direction opposite to the predetermined direction above. In other words, the both cam surfaces 202a and 203a are formed so that the both plates 202 and 203 are pressed by the balls 204a to separate from each other and the second cam plate 203 moves rightward when the second cam plate 203 rotates in the predetermined direction against the urging force that is the sum of the urging force of the disc spring 83 and that of the coil spring 205.

Furthermore, the both cam surfaces 202a and 203a are formed so that the both cam surfaces 202a and 203a move leftward by the urging force that is the sum of the urging force of the disc spring 83 and that of the coil spring 205 when the second cam plate 203 rotates in the opposite direction.

The coil spring 205 urges the second cam plate 203 rightward. On the other hand, the disc spring 83 urges the second cam plate 203 leftward via the pressure plate 77 and the like. The urging force by which the disc spring 83 urges the second cam plate 203 leftward is greater than the urging force by which the coil spring 205 urges the second cam plate 203 rightward. Due to this, the disc spring 83 and the coil spring 205 urge the second cam plate 203 leftward as a whole, thereby pressing the pressure plate 77 leftward via the balls 204a, the first cam plate 202, the slide shaft 201, the second pressing plate 103, and the bearing 104. Namely, the disc spring 83 and the coil spring 205 urge the pressure plate 77 toward the plate group 66 as a whole. The pressure plate 77 is thereby urged to pressure-contact with the plate group 66 even if the engine 4 is an idling state.

The "idling state" means a state in which the engine 4 is running and the accelerator grip (not shown) of the motorcycle 1 is closed. In the present embodiment, the pressure plate 77 is constantly urged toward the plate group 66 by the entirety of the plate sprig 83 and the coil sprig 205. Even in the idling state, the friction plate 64 and the clutch plate 65 thereby contact with each other and transmit a part of a rotation driving force while sliding. Namely, the clutch 2 is in the so-called partial clutch engagement state even in the idling state.

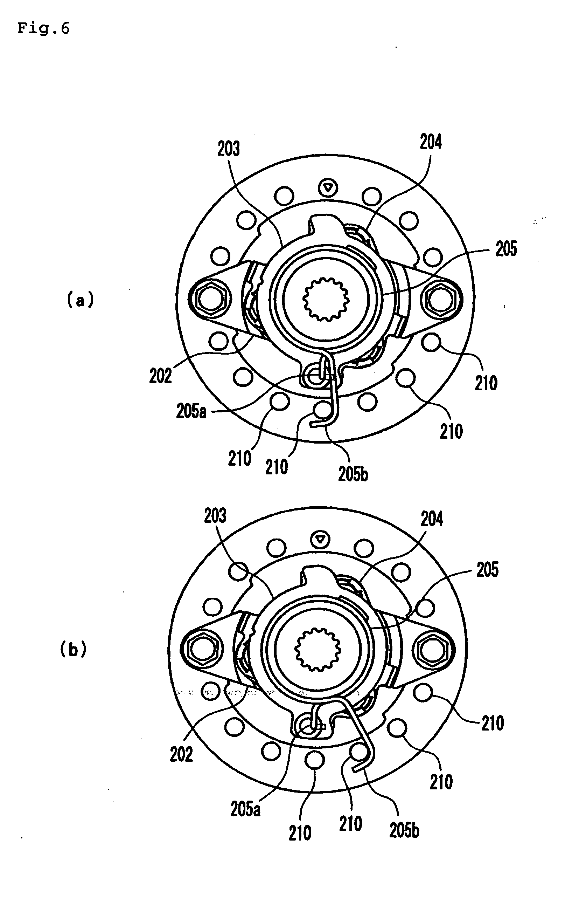

As shown in Figs. 6(a) and 6(b), the clutch 2 includes a plurality of pins 210 arranged circumferentially about a rotational center of the pressure plate 77 (that is, a center of the coil spring 205). These pins 210 are formed to be able to lock one end 205b of the coil spring 205. Due to this, by appropriately selecting the pins 210 locking one end 205b of the coil spring 205, the urging force of the coil spring 205 can be adjusted. For example, by changing the pin 210 locking one end 205b of the coil spring 205 from the pin 210 shown in Fig 6(a) to that shown in Fig. 6(b), the urging force of the coil spring 205 against the pressure plate 77 can be intensified.

The clutch 2 according to the present embodiment includes a clutch release mechanism 86. The clutch release mechanism 86 forcibly releases a pressure-contact state of the plate group 66 in response to the operation of the cutch lever 24 by a rider. This clutch release mechanism 86 enables the clutch 2 to be disengaged by a manual operation of a rider of the motorcycle 1.

As stated above, in the motorcycle 1 according to the present embodiment, the clutch 2 is configured so as to be in the partial clutch disengagement state even in the idling state. However, the clutch release mechanism 86 can completely disengage the partially engaged clutch 2.

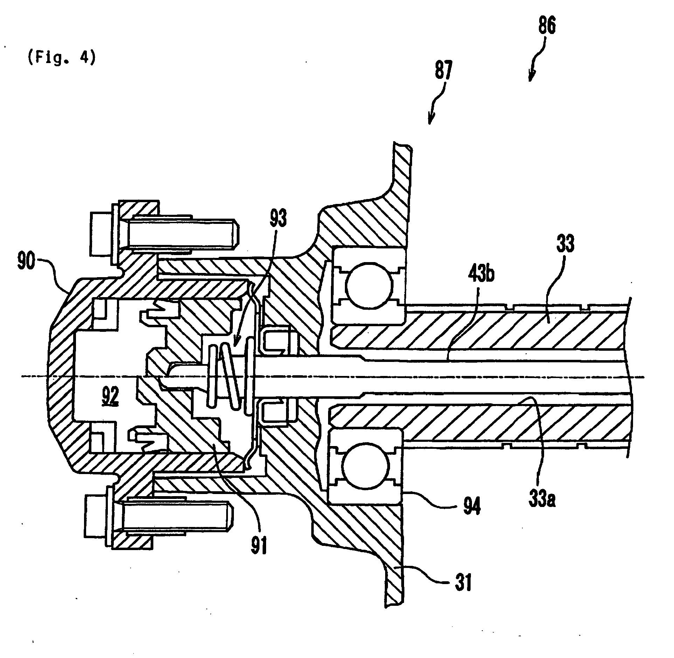

The clutch release mechanism 86 includes the push mechanism 43 (see Fig. 3) and a drive mechanism 87 (see Fig. 4) for driving the push mechanism 43. As shown in Fig. 3, the push mechanism 43 includes the short push rod 43a, the long push rod 43b, and the ball 43c interposed between the short push rod 43a and the long push rod 43b. The through-hole 33a is formed in the main shaft 33 and the push mechanism 43 is arranged within the through-hole 33a. It should be noted that the through-hole 33a also serves as an oil supply hole for supplying the oil to the respective sliding portions or the like of the clutch 2. Specifically, the oil is supplied to the respective sliding portions of the clutch 2 via the gap 89 between the inner wall of the through-hole 33a and the push mechanism 43.

A right end of the short push rod 43a protrudes from the main shaft 33 and is attached to the first pressing plate 102 of the sub clutch 100. Due to this, when the sub clutch 100 is engaged, the short push rod 43a rotates integrally with the pressure plate 77. Further, when the sub clutch 100 and the clutch 2 are engaged, the short push rod 43a rotates along with the clutch housing 46. On the other hand, the long push rod 43b does not rotate along with the main shaft 33. Due to this, the ball 43c is provided between the short push rod 43a and the long push rod 43b to reduce a sliding resistance between the short push rod 43a and the long push rod 43b.

Fig. 4 is a cross-sectional view showing the push rod drive mechanism 87. As shown in Fig. 4, the left end of the long push rod 43b is located on the left side of a left end of the main shaft 33 and reaches the push rod drive mechanism 87. In Fig. 4, a lower portion of the main shaft 33 than the axial center of the main shaft 33 represents a state in which the clutch release mechanism 86 is not driven. In other words, the lower portion of the main shaft 33 than the axial center of the main shaft 33 represents a state in which the push mechanism 43 is located relatively on the left side and in which the pressure plate 77 is not displaced rightward by the push mechanism 43. On the other hand, an upper portion of the main shaft 33 than the axial center of the main shaft 33 represents a state in which the clutch release mechanism 86 is driven. In other words, the upper portion of the main shaft 33 than the axial center of the main shaft 33 represents a state in which the push mechanism 43 is located relatively on the right side and in which the pressure plate 77 is displaced rightward by the push mechanism 43.

As shown in Fig. 4, the drive mechanism 87 includes a cylinder 90 and a piston 91. The piston 91 is slidable with respect to the cylinder 90 in the axial direction of the main shaft 33. The piston 91 is attached to the long push rod 43b. Due to this, when the piston 91 slides, the long push rod 43b also moves in the axial direction of the main shaft 33.

An operating chamber 92 is defined and formed between the piston 91 and the cylinder 90. The operating chamber 92 is filled with the oil.

A helical compression spring 93 is disposed between the piston 91 and the crankcase 31. The piston 91 is urged leftward by the helical compression spring 93. Namely, the piston 91 is urged in the direction in which the push mechanism 43 is displaced leftward to engage with the clutch 2. Due to this, when a rider of the motorcycle 1 releases the operation of the clutch lever 24 (see Fig. 1), the push mechanism 43 automatically moves leftward.

Operation performed by the clutch 2 will next be described. First, an operation for causing the clutch 2 to be disengaged will be described.

When a rider of the motorcycle 1 grasps the clutch lever 24 (see Fig. 1), an internal pressure of the operating chamber 92 of the drive mechanism 87 rises. The piston 91 thereby moves rightward and the long push rod 43b also moves rightward. The ball 43c and the short push rod 43a thereby move to the right and the first pressing plate 102 of the sub clutch 100 moves rightward. The friction plate 101 of the sub clutch 100 is thereby sandwiched between the first pressing plate 102 and the second pressing plate 103, thus rotating the sub clutch 100 into a connected state. The slide shaft 201 of the toggle mechanism 200 thereby rotates along with the pressure plate 77 in a predetermined direction.

If the slide shaft 201 rotates in the predetermined direction, the second cam plate 203 of the toggle mechanism 200 also rotates in the same direction. The balls 204a on the ball plate 204 thereby ride on from between the first cam surface 202a and the second cam surface 203a and the second cam plate 203 is pressed rightward by the balls 204a. The slide shaft 201 is thereby pressed rightward. As a result, the pressure plate 77 moves rightward by a force by which the short push rod 43a presses the pressure plate 77 rightward via the first pressing plate 102 and the friction plate 101 and a force by which the slide shaft 201 pulls the pressure plate 77 rightward via the second pressing plate 103 and the bearing 104. The pressure-contact state of the disc group 66 is thereby released to disengage the clutch 2.

It should be noted that rotation of the second cam plate 203 is restricted so as not to exceed a predetermined amount. For this reason, in the state in which the clutch 2 is disengaged, the friction plate 101 rotates with respect to the first pressing plate 102 and the second pressing plate 103. That is, the friction plate 101 slides with respect to the first pressing plate 102 and the second pressing plate 103. However, since the oil is supplied to the first friction surface 101 a and the second friction surface 101 b of the first pressing plate 101, wear of the friction plate 101 is suppressed.

Operation when the clutch 2 is to be engaged will next be described.

When the clutch 2 is engaged, a rider lets go his or her hold of the clutch lever 24 which the rider has grasped. The internal pressure of the operating chamber 92 of the drive mechanism 87 thereby decreases. The piston 91 and the long push rod 43b move leftward accordingly. The ball 43c and the short push rod 43a also move to the left and the first pressing plate 102 of the sub clutch 100 moves leftward. Due to this, the first pressing plate 102 of the sub clutch 100 separates from the friction plate 101. Further, the second pressing plate 103 is not pressed rightward by the first pressing plate 102. Consequently, a rightward pressing force against the slide shaft 201 is eliminated and the second cam plate 203 that has received the urging force of the coil spring 205 rotates in the opposite direction, whereby the second cam plate 203 and the slide shaft 201 move to the left. As a result, the second pressing plate 103 also moves leftward.

Moreover, since the rightward pressing force applied by the first pressing plate 102, the pressure plate 77 moves leftward by the urging force of the disc spring 83 and the like. As a consequence, the pressure plate 77 pressure-contacts with the plate group 66 to engage the clutch 2. At this time, the friction plate 101 of the sub clutch 100 separates from the second pressing plate 103.

In the clutch 2 according to the present embodiment, the urging force applied to the pressure plate 77 by the disc spring 83 varies according to a radial position of the roller weight 41. Specifically, when the number of revolutions of the pressure plate 77 is large, the roller weight 41 moves outward in a radial direction. As a result, the roller weight 41 moves rightward to greatly deform the disc spring 83. Accordingly, the plate sprig 83 is greatly deformed by the roller weight 41 without need to setting high a coefficient of elasticity of the disc spring 83 itself. Thus, the urging force applied to the pressure plate 77 by the disc spring 83 becomes relatively large. On the other hand, when the number of revolutions of the pressure plate 77 is small, the roller weight 41 moves inward of the radial direction. As a result, the roller weight 41 moves leftward and a deformation amount of the disc spring 83 becomes small. Accordingly, the urging force applied to the pressure plate 77 by the disc spring 83 becomes relatively small.

When the number of revolutions of the engine is large, it is necessary for the pressure plate 77 to pressure-contact with the plate group 60 with a large pressing force. In the clutch 2 according to the present embodiment, when the number of revolutions of the engine is large, the roller weight 41 moves outward in a radial direction and the deformation amount of the disc spring 83 thereby increases. Due to this, a sufficiently large pressing force can be obtained without setting high the coefficient of elasticity of the disc spring 83. It is, therefore, possible to suppress the coefficient of elasticity of the disc spring 83 to be relatively low, that is, to suppress spring capacity to be relatively small.

As stated so far, in the motorcycle 1 according to the present embodiment, even in the idling state, the pressure plate 77 enables the friction plate 64 to contact with the clutch plate 65 to transmit a part of the driving force of the clutch housing 46 to the clutch boss 48. Namely, the clutch 2 turns into a partially engaged state. Due to this, even in the idling state, a part of the driving force of the engine 4 is transmitted to the rear wheel 19 and the rear wheel 19 is driven. Consequently, although the motorcycle 1 includes the clutch 2 that is the centrifugal clutch, the motorcycle 1 can run in the idling state. Therefore, a rider can drive the motorcycle 2 at low speed by appropriately operating the clutch lever 24 without frequently repeating the open operation and the close operation of the acceleration grip.

According to the present embodiment, the clutch 2 includes the disc spring 83 and the coil sprig 205 as an elastic body that constantly urges the pressure plate 77 toward the plate group 66 so as to pressure-contact the plate group 66 even in the idling state. In this way by providing the elastic bodies that constantly urge the pressure plate 77 toward the plate group 66 even in the idling state, the motorcycle 1 exhibiting the functions and advantages above can be readily realized.

According to the present embodiment, the urging force of the coil sprig 205 against the pressure plate 77 is adjustable. Due to this, the degree of the partial clutch engagement state in the idling state, that is, by how much degree the driving force is transmitted from the clutch housing 46 to the clutch boss 48 can be adjusted relatively easily. Moreover, even if the plate group 66 is wom by aging degradation, a power transmission performance of the plate group 66 can be recovered to some extent by weakening the urging force of the coil spring 205 (in other words, by intensifying the urging force of the entirety of the disc spring 83 and the coil sprig 205 for urging the pressure plate 77 leftward).

Further, in the present embodiment, the coil spring 205 is configured so that a position of one end 205b of the coil spring 205 can be adjusted. By adjusting the position of one end 205b, the urging force can be adjusted. In the present embodiment, the other end 205a of the coil sprig 205 is fixed. Alternatively, positions of the both ends 205a and 205b can be made adjustable. More specifically, the clutch 2 according to the present embodiment includes a plurality of pins 210 arranged circumferentially around the rotational center of the pressure plate 77 and capable of locking one end 205b of the coil spring 205. The urging force of the coil sprig 205 against the pressure plate 77 can be adjusted by appropriately selecting the pin 210 locking one end 205b of the coil spring 205, that is, according to the position of the pin 210 to be locked. According to the present embodiment, therefore, the urging force of the coil spring 205 can be easily adjusted.

In the present embodiment, the clutch 2 is a so-called multiplate centrifugal clutch including a plurality of friction plates 64 and a plurality of clutch plates 65. In the case of a conventional multiplate centrifugal clutch, a shock generated during clutch engagement depends solely on a moving manner of a centrifugal weight and the shock during the clutch engagement increases when the centrifugal weight quickly moves. For this reason, depending on a shape, a dimension and the like of the centrifugal weight, a shock generated at the time that the clutch starts to engage after the accelerator is opened become relatively large. Ride feeling during the low speed driving is not always satisfactory. The motorcycle 1 according to the present embodiment, by contrast, can run at low speed by operating the clutch lever 24. Therefore, the motorcycle 1 according to the present embodiment can ensure provision of good ride feeling to the rider although the motorcycle 1 includes the multiplate centrifugal clutch.

In the present embodiment, the clutch 2 includes the toggle mechanism 200 that receives the torque of the pressure plate 77 and converts the torque into a force for moving the pressure plate 77 rightward during clutch disengagement by operating the clutch lever 24. According to the present embodiment, by providing such a toggle mechanism 200, the burden on a rider who operates the clutch lever 24 is mitigated. Further, according to the present embodiment, providing the toggle mechanism 200 enables the clutch capacity to be increased. Namely, the driving force which the clutch 2 can transmit can be increased. In this case, according to the conventional centrifugal clutch, when the clutch capacity increases, the shock generated when the centrifugal clutch is automatically engaged from the idling state tends to increase. According to the present embodiment, by contrast, even if the clutch capacity is large, the shock following the clutch engagement does not occur since the clutch 2 is not automatically switched from the disengagement state to the engagement state.

In the present embodiment stated above, the elastic body that constantly urges the pressure plate 77 toward the plate group 66 is the disc spring 83 and the coil spring 205. However, the elastic body is not limited to a combination of a plurality of elastic members but may be formed out of a single elastic member. Further, a torsion spring other than the coil spring 205 can be used. Moreover, the number of turns of the torsion spring is not limited to a specific number of turns. Besides, the elastic body may include a spring other than the torsion sprig or an elastic body other than the spring.

As stated so far, the present teaching is effective for a motorcycle including a centrifugal clutch.

The description above discloses (among others) an embodiment of a motorcycle comprising: an engine that generates a driving force; a drive wheel; a centrifugal clutch that freely intermittently transmits the driving force from the engine to the drive wheel; and a clutch actuating element that is operated by a rider and that disengages the centrifugal clutch, wherein the centrifugal clutch includes: a driving-side solid of revolution including a first plate; a driven-side solid of revolution including a second plate opposed to the first plate in a predetermined direction; a pressure plate that is operated by the clutch actuating element to move in the predetermined direction, rotates along with the driving-side solid of revolution, and contacts the first plate with the second plate by moving in the predetermined direction; and a centrifugal weight that moves outward of a radial direction of the pressure plate by as much as a movement amount according to a centrifugal force, and presses by a force according to the movement amount the pressure plate in a direction in which the first plate contacts with the second plate, wherein the pressure plate contacts the first plate with the second plate so as to transmit a part of a torque of the driving-side solid of revolution from the first plate to the driven-side solid of revolution via the second plate even when the engine is in the idling state.

Preferably, the centrifugal clutch includes an elastic body that urges the pressure plate toward the first plate and the second plate in such a way that the first plate contacts with the second plate even if the engine is in the idling state.

Further, preferably an urging force of the elastic body applied to the pressure plate is adjustable.

Further, preferably the elastic body includes a torsion spring, an attachment position on one end or both ends of the torsion spring being adjustable.

Further, preferably a plurality of pins is arranged circumferentially about a rotational center of the pressure plate, and capable of locking one end of the torsion spring, wherein the urging force of the torsion spring is adjusted by positions of the pins to be locked.

Further, preferably the driving-side solid of revolution includes a plurality of the first plates, the driven-side solid of revolution includes a plurality of the second plates, and the plurality of first plates and the plurality of second plates are alternately arranged along the predetermined direction.

Further, preferably the centrifugal clutch further includes a toggle mechanism that receives a torque of the pressure plate when the clutch actuating element declutches, and converts the torque into a force for moving the pressure plate in a direction in which the first plate separates from the second plate.

Further, preferably a sub clutch of the motorcycle includes: a friction plate provided to rotate along with the pressure plate; and a pressing body that receives the torque from the friction plate by pressure-contacting with the friction plate at the time of declutching, and moves in the predetermined direction along with the pressure plate, wherein the toggle mechanism includes: a first cam plate having a first cam surface formed thereon; a second cam plate having a second cam surface formed thereon, the second cam surface being opposed to the first cam surface; a cam ball that is arranged between the first cam surface and the second cam surface, and pushes out the first cam plate and the second cam plate in a direction in which the first cam plate separates from the second cam plate by moving between the first cam plate and the second cam plate when the second cam plate rotates relatively to the first cam plate in a predetermined rotational direction; and a rotary shaft that is fixed to the pressing body of the sub clutch, attached to the second cam plate so as to rotate along with the second cam plate, receives the torque of the pressure plate via the sub clutch at the time of declutching, and rotates the second cam plate in the predetermined rotational direction, and the elastic body includes:
a first spring that urges the pressure plate toward the first plate and the second plate; and a second spring that urges the second cam plate toward the direction in which the first cam plate separates from the second cam plate.

In order to enable driving of a motorcycle including a centrifugal clutch at low speed by clutch operation, the following is preferably suggested:
A centrifugal clutch 2 of a motorcycle comprises a clutch housing 46 including a friction plate 64, a clutch boss 48 including a clutch plate 65, a pressure plate 77 that pressure-contacts the friction plate 64 with the cutch plate 65, a roller weight 41 that receives a centrifugal force and presses the pressure plate 77 toward a plate group 66 side, and a coil spring 205 that constantly urges the pressure plate 77 toward the plate group 66 side so as to transmit a part of a driving force from the cutch housing 46 to the clutch boss 48 even in an idling state.

## Claims

1. Vehicle, in particular straddle-type vehicle such as a motorcycle, comprising:
an engine (3) configured to generate a driving force to drive at least one drive wheel (19); a centrifugal clutch (2) configured to freely intermittently transmit the driving force from the engine (3) to the drive wheel (19); and
a clutch actuating element (24) operable by a driver of the vehicle to disengage the centrifugal clutch (2),
**characterized in that**
the centrifugal clutch (2) is configured to assume a partially engaged state to transmit a part of the driving force from the engine (3) to the drive wheel (19) when the engine (3) is in its idling state and the clutch actuating element (24) is not operated.

2. Vehicle according to claim 1, wherein the centrifugal clutch (2) includes:
a driving-side solid of revolution (46) including a first plate (64);
a driven-side solid of revolution (48) including a second plate (65) opposed to the first plate (64) in a predetermined direction; and
a pressure plate (77) operable by the clutch actuating element (24) to move in the predetermined direction, the pressure plate (77) being configured to rotate along with the driving-side solid of revolution (46) and to contact the first plate (64) with the second plate (65) by moving in the predetermined direction.

3. Vehicle according to claim 2, wherein the pressure plate (77) is configured to contact the first plate (64) with the second plate (65) so as to transmit a part of a torque of the driving-side solid of revolution (46) from the first plate (64) to the driven-side solid of revolution (48) via the second plate (65) even when the engine (3) is in its idling state.

4. Vehicle according to claim 2 or 3, wherein the centrifugal clutch (2) includes a centrifugal weight (41) configured to move outward of a radial direction of the pressure plate (77) by a movement amount according to a centrifugal force, and to press by a force according to the movement amount the pressure plate (77) in a direction in which the first plate (64) contacts with the second plate (65).

5. Vehicle according to one of claims 2 to 4, wherein the centrifugal clutch (2) includes an elastic body (205) configured to urge the pressure plate (77) toward the first plate (64) and the second plate (65) in such a way that the first plate (64) contacts with the second plate (65) even if the engine (3) is in its idling state.

6. Vehicle according to claim 5, wherein an urging force of the elastic body (205) applied to the pressure plate (77) is adjustable.

7. Vehicle according to claim 5 or 6, wherein the elastic body (205) includes a torsion spring, and, preferably, an attachment position on one end or both ends of the torsion spring is adjustable.

8. Vehicle according to claim 7, wherein a plurality of pins (210) is arranged circumferentially about a rotational center of the pressure plate (77) and capable of locking one end of the torsion spring, wherein the urging force of the torsion spring is adjusted by positions of the pins (210) to be locked.

9. Vehicle according to one of claims 2 to 8, wherein the driving-side solid of revolution (46) includes a plurality of the first plates (64), the driven-side solid of revolution (48) includes a plurality of the second plates (65), and the plurality of first plates (64) and the plurality of second plates (65) are alternately arranged along the predetermined direction.

10. Vehicle according to one of claims 2 to 9, wherein the centrifugal clutch (2) includes a toggle mechanism (200) configured to receive a torque of the pressure plate (77) when the clutch actuating element (24) declutches, and configured to convert the torque into a force for moving the pressure plate (77) in a direction in which the first plate (64) separates from the second plate (65).

11. Vehicle according to one of claims 2 to 10, wherein a sub clutch (100) includes a friction plate (101) configured to rotate along with the pressure plate (77), and, preferably, a pressing body (103) configured to receive the torque from the friction plate (101) by pressure-contacting with the friction plate (101) at the time of declutching and to move in the predetermined direction along with the pressure plate (77).

12. Vehicle according to claim 10 or 11, wherein the toggle mechanism (200) includes a first cam plate (202) having a first cam surface (202a) formed thereon, and a second cam plate (203) having a second cam surface (203a) formed thereon, the second cam surface (203a) being opposed to the first cam surface (202a).

13. Vehicle according to claim 12, wherein a cam ball (204a) is arranged between the first cam surface (202a) and the second cam surface (203a) so as to push out the first cam plate (202) and the second cam plate (203) in a direction in which the first cam plate (202) separates from the second cam plate (203) when the second cam plate (203) rotates relatively to the first cam plate (202) in a predetermined rotational direction.

14. Vehicle according to, claim 12 or 13, wherein a rotary shaft (201) is fixed to the pressing body (103) of the sub clutch (100) and is attached to the second cam plate (203) so as to rotate along with the second cam plate (203), said rotary shaft (201) being preferably configured to receive the torque of the pressure plate (77) via the sub clutch (100) at the time of declutching and to rotate the second cam plate (203) in the predetermined rotational direction.

15. Vehicle according to one of claims 12 to 14, wherein the elastic body (205) includes a first spring configured to urge the pressure plate (77) toward the first plate (64) and the second plate (65), and a second spring configured to urge the second cam plate (203) toward the direction in which the first cam plate (202) separates from the second cam plate (203).

## Patentansprüche

1. Fahrzeug, insbesondere Spreizsitz-Fahrzeug, wie beispielsweise ein Motorrad, das umfasst:
einen Motor (3), der so eingerichtet ist, dass er eine Antriebskraft zum Antreiben wenigstens eines Antriebsrades (19) erzeugt;
eine Fliehkraftkupplung (2), die so eingerichtet ist, dass sie die Antriebskraft von dem Motor (3) frei intermittierend auf das Antriebsrad (19) überträgt; und
ein Kupplungs-Betätigungselement (24), das von einem Führer des Fahrzeugs betätigt werden kann, um die Fliehkraftkupplung (2) auszukuppeln,
**dadurch gekennzeichnet, dass**
die Fliehkraftkupplung (2) so eingerichtet ist, dass sie einen teilweise eingerückten Zustand annimmt, um einen Teil der Antriebskraft von dem Motor (3) auf das Antriebsrad (19) zu übertragen, wenn sich der Motor in seinem Leerlaufzustand befindet und das Kupplungs-Betätigungselement (24) nicht betätigt wird.

2. Fahrzeug nach Anspruch 1, wobei die Fliehkraftkupplung (2) enthält:
einen Antriebsseiten-Drehkörper (46), der eine erste Platte (64) enthält;
einen Abtriebsseiten-Drehkörper (48), der eine zweite Platte (65) enthält, die der ersten Platte (64) in einer vorgegebenen Richtung gegenüberliegt; und
eine Druckplatte (77), die mit dem Kupplungs-Betätigungselement (24) betätigt werden kann, um sich in der vorgegebenen Richtung zu bewegen, wobei die Druckplatte (77) so eingerichtet ist, dass sie sich zusammen mit dem Antriebsseiten-Drehkörper (46) dreht und die erste Platte (64) mit der zweiten Platte (65) in Kontakt bringt, indem sie sich in der vorgegebenen Richtung bewegt.

3. Fahrzeug nach Anspruch 2, wobei die Druckplatte (77) so eingerichtet ist, dass sie die erste Platte (64) mit der zweiten Platte (65) in Kontakt bringt, um so einen Teil eines Drehmomentes des Antriebsseiten-Drehkörpers (64) selbst dann von der ersten Platte (64) über die zweite Platte (65) auf den Abtriebsseiten-Drehkörper (48) zu übertragen, wenn sich der Motor (3) in seinem Leerlaufzustand befindet.

4. Fahrzeug nach Anspruch 2 oder 3, wobei die Fliehkraftkupplung (2) ein Fliehkraftgewicht (41) enthält, das so eingerichtet ist, dass es sich um ein Bewegungsmaß entsprechend einer Zentrifugalkraft in einer radialen Richtung der Druckplatte (77) nach außen bewegt und die Druckplatte (77) mit einer Kraft entsprechend dem Bewegungsmaß in einer Richtung drückt, in der die erste Platte (64) mit der zweiten Platte (65) in Kontakt kommt.

5. Fahrzeug nach einem der Ansprüche 2 bis 4, wobei die Fliehkraftkupplung (2) einen elastischen Körper (205) enthält, der so eingerichtet ist, dass er die Druckplatte (70) so auf die erste Platte (64) und die zweite Platte (65) zu drückt, dass die erste Platte (64) selbst dann mit der zweiten Platte (65) in Kontakt kommt, wenn sich der Motor (3) in seinem Leerlaufzustand befindet.

6. Fahrzeug nach Anspruch 5, wobei eine auf die Druckplatte (77) ausgeübte Druckkraft des elastischen Körpers (205) reguliert werden kann.

7. Fahrzeug nach Anspruch 5 oder 6, wobei der elastische Körper (205) eine Torsionsfeder enthält und vorzugsweise eine Anbringungsposition an einem Ende oder beiden Enden der Torsionsfeder reguliert werden kann.

8. Fahrzeug nach Anspruch 7, wobei eine Vielzahl von Bolzen (210) in Umfangsrichtung um einen Drehmittelpunkt der Druckplatte (77) herum angeordnet sind und ein Ende der Torsionsfeder arretieren können, und die Drückkraft der Torsionsfeder über Positionen der zu arretierenden Bolzen (210) reguliert wird.

9. Fahrzeug nach einem der Ansprüche 2 bis 8, wobei der Antriebsseiten-Drehkörper (46) eine Vielzahl der ersten Platten (64) enthält, der Abtriebsseiten-Drehkörper (48) eine Vielzahl der zweiten Platten (65) enthält und die Vielzahl erster Platten (64) und die Vielzahl zweiter Platten (65) abwechselnd in der vorgegebenen Richtung angeordnet sind.

10. Fahrzeug nach einem der Ansprüche 2 bis 9, wobei die Fliehkraftkupplung (2) einen Umschaltmechanismus (200) enthält, der so eingerichtet ist, dass er ein Drehmoment der Druckplatte (77) aufnimmt, wenn das Kupplungs-Betätigungselement (24) auskuppelt, und so eingerichtet ist, dass er das Drehmoment in eine Kraft zum Bewegen der Druckplatte (77) in einer Richtung umwandelt, in der sich die erste Platte (64) von der zweiten Platte (65) trennt.

11. Fahrzeug nach einem der Ansprüche 2 bis 10, wobei eine Teilkupplung (100) eine Reibplatte (101), die so eingerichtet ist, dass sie sich zusammen mit der Druckplatte (77) dreht, und vorzugsweise einen Presskörper (103) enthält, der so eingerichtet ist, dass er das Drehmoment von der Reibplatte (101) aufnimmt, indem er beim Auskuppeln in Druckkontakt mit der Reibplatte (101) kommt und sich zusammen mit der Druckplatte (77) in der vorgegebenen Richtung bewegt.

12. Fahrzeug nach Anspruch 10 oder 11, wobei der Umschaltmechanismus (200) eine erste Nockenplatte (202), an der eine erste Nockenfläche (202a) ausgebildet ist, und eine zweite Nockenplatte (203) enthält, an der eine zweite Nockenfläche (203a) ausgebildet ist, wobei die zweite Nockenfläche (203a) der ersten Nockenfläche (202a) gegenüberliegt.

13. Fahrzeug nach Anspruch 12, wobei eine Nockenkugel (204a) zwischen der ersten Nockenfläche (202a) und der zweiten Nockenfläche (203a) so angeordnet ist, dass sie die erste Nockenplatte (202) und die zweite Nockenplatte (203a) in einer Richtung nach außen drückt, in der sich die erste Nockenplatte (202) von der zweiten Nockenplatte (203) trennt, wenn sich die zweite Nockenplatte (203) relativ zu der ersten Nockenplatte (202) in einer vorgegebenen Drehrichtung dreht.

14. Fahrzeug nach Anspruch 12 oder 13, wobei eine Drehwelle (201) an dem Presskörper (103) der Teilkupplung (100) befestigt ist und an der zweiten Nockenplatte (203) so angebracht ist, dass sie sich zusammen mit der zweiten Nockenplatte (203) dreht, und die Drehwelle (201) vorzugsweise so eingerichtet ist, dass sie beim Auskuppeln das Drehmoment der Druckplatte (77) über die Teilkupplung (100) empfängt und die zweite Nockenplatte (203) in der vorgegebenen Drehrichtung dreht.

15. Fahrzeug nach einem der Ansprüche 12 bis 14, wobei der elastische Körper (205) eine erste Feder, die so eingerichtet ist, dass sie die Druckplatte (77) auf die erste Platte (64) und die zweite Platte (65) zu drückt, und eine zweite Feder enthält, die so eingerichtet ist, dass sie die zweite Nockenplatte (203) in der Richtung drückt, in der sich die erste Nockenplatte (202) von der zweiten Nockenplatte (203) trennt.

## Revendications

1. véhicule, en particulier un véhicule de type monté à califourchon tel qu'une motocyclette, comprenant :
- un moteur (3) configuré pour générer une force motrice pour entrainer au moins une roue motrice (19) ;
- un embrayage centrifuge (2) configuré pour librement et de façon intermittente transmettre la force motrice du moteur (3) à la roue motrice (19) ; et
- un élément d'actionnement d'embrayage (24) utilisable par le conducteur du véhicule pour désengager l'embrayage centrifuge (2),
- **caractérisé en ce que** :
- l'embrayage centrifuge (2) est configuré pour assumer un état partiellement engagé afin de transmettre une partie de la force motrice du moteur (3) à la roue motrice (19) lorsque le moteur (3) est dans un état de ralenti et que l'élément d'actionnement d'embrayage (24) n'est pas utilisé.

2. Véhicule selon la revendication 1, dans lequel l'embrayage centrifuge (2) inclut :
- un solide de révolution côté entrainement (46) incluant un premier plateau (64) ;
- un solide de révolution côté entrainé (48) incluant un second plateau (65) opposé au premier plateau (64) dans une direction prédéterminée ; et
- un plateau de pression (77) actionnable par l'élément d'actionnement d'embrayage (24) pour se déplacer dans la direction prédéterminée, le plateau de pression (77) étant configuré pour tourner avec le solide de révolution côté entrainement (46) et faire venir en contact le premier plateau (64) avec le second plateau (65) en se déplaçant dans la direction prédéterminée.

3. Véhicule selon la revendication 2, dans lequel le plateau de pression (77) est configuré pour faire venir en contact le premier plateau (64) avec le second plateau (65) de façon à transmettre une partie d'un couple du solide de révolution côté entrainement (46) du premier plateau (64) au solide de révolution côté entrainé (48) via le second plateau (65) même lorsque le moteur (3) est dans son état de ralenti.

4. Véhicule selon les revendications 2 ou 3, dans lequel l'embrayage centrifuge (2) inclut une masselotte centrifuge (41) configurée pour se déplacer vers l'extérieur d'une direction radiale du plateau de pression (77) par une quantité de mouvement suivant une force centrifuge et à presser par une force suivant la quantité de mouvement le plateau de pression (77) dans une direction dans laquelle le premier plateau (64) vient en contact avec le second plateau (65).

5. Véhicule selon l'une des revendications 2 à 4, dans lequel l'embrayage centrifuge (2) inclut un corps élastique (205) configuré pour solliciter le plateau de pression (77) vers le premier plateau (64) et le second plateau (65) de telle manière que le premier plateau (64) vienne en contact avec le second plateau (65) même si le moteur (3) est dans son état de ralenti.

6. Véhicule selon la revendication 5, dans lequel une force de sollicitation du corps élastique (205) appliquée au plateau de pression (77) est ajustable.

7. véhicule selon les revendications 5 ou 6, dans lequel le corps élastique (205) inclut un ressort de torsion et, de préférence, une position d'attache sur une extrémité ou les deux extrémités du ressort de torsion est ajustable.

8. Véhicule selon la revendication 7, dans lequel une pluralité de broches (210) est agencée circonférentiellement autour d'un centre de rotation du plateau de pression (77) et susceptible de verrouiller une extrémité su ressort de torsion, dans lequel la force de sollicitation du ressort de torsion est ajustée par des positions des broches (210) à verrouiller.

9. Véhicule selon l'une des revendications 2 à 8, dans lequel le solide de révolution côté entrainement (46) inclut une pluralité de premiers plateaux (64), le solide de révolution côté entrainé (48) inclut une pluralité de seconds plateaux (65) et la pluralité de premiers plateaux (64) et la pluralité de seconds plateaux (65) sont en alternance agencées le long de la direction prédéterminée.

10. Véhicule selon l'une des revendications 2 à 9, dans lequel l'embrayage centrifuge (2) inclut un mécanisme de basculement (200) configuré pour recevoir un couple du plateau de pression (77) lorsque l'élément d'actionnement d'embrayage (24) débraye et configuré pour convertir le couple en une force pour déplacer le plateau de pression (77) dans une direction dans laquelle le premier plateau (64) se sépare du second plateau (65).

11. Véhicule selon l'une des revendications 2 à 10, dans lequel un sous-embrayage (100) inclut un plateau de friction (101) configuré pour tourner avec le plateau de pression (77) et, de préférence, un corps presseur (103) configuré pour recevoir le couple du plateau de friction (101) en venant en contact de pression avec le plateau de friction (101) au moment d'un débrayage et pour se déplacer dans la direction prédéterminée avec le plateau de pression (77).

12. Véhicule selon l'une des revendications 10 ou 11, dans lequel le mécanisme de basculement (200) inclut un premier plateau de came (202) comportant une première surface de came (202a) ménagée sur celui-ci et une second plateau de came (203) comportant une seconde surface de came (203a) ménagée sur celui-ci, la seconde surface de came (203a) étant opposée à la première surface de came (202a).

13. Véhicule selon la revendication 12, dans lequel une bille de came (204a) est agencée entre la première surface de came (202a) et la seconde surface de came (203a) de façon à repousser le premier plateau de came (202) et le second plateau de came (203) dans une direction dans laquelle le premier plateau de came (202) se sépare du second plateau de came (203) lorsque le second plateau de came (203) tourne relativement au premier plateau de came (202) dans une direction de rotation prédéterminée.

14. Véhicule selon les revendications 12 ou 13, dans lequel un arbre rotatif (201) est fixé au corps presseur (103) du sous-embrayage (100) et est attaché au second plateau de came (203) de façon à tourner avec le second plateau de came (203), ledit arbre rotatif (201) étant, de préférence, configuré pour recevoir le couple du plateau de pression (77) via le sous-embrayage (100) au moment d'un débrayage et pour entrainer en rotation le second plateau de came (203) dans la direction de rotation prédéterminée.

15. Véhicule selon l'une des revendications 12 à 14, dans lequel le corps élastique (205) inclut un premier ressort configuré pour solliciter le plateau de pression (77) vers le premier plateau (64) et le second plateau (65) et un second ressort configuré pour solliciter le second plateau de came (203) dans la direction dans laquelle le premier plateau de came (202) se sépare du second plateau de came (203).
